# EUROPEAN PATENT SPECIFICATION

(11) **EP 3 459 768 B1**
(45) Date of publication and mention of the grant of the patent: **30.12.2020**
(21) Application number: 17799347.4
(22) Date of filing: 15.05.2017
(51) Int. Cl.: B60H 1/00

(54) **VEHICLE AIR CONDITIONER AND CONTROL METHOD THEREFOR**
FAHRZEUGKLIMAANLAGE UND STEUERUNGSVERFAHREN DAFÜR
CLIMATISEUR DE VÉHICULE ET PROCÉDÉ DE COMMANDE CORRESPONDANT

(30) Priority: 18.05.2016 JP 2016099886
(43) Date of publication of application: 27.03.2019
(73) Proprietor: Valeo Japan Co., Ltd., Saitama 360-0193 (JP)
(72) Inventor: NAGANO, Hideki, Kumagaya-shi Saitama 360-0193 (JP); UENO, Mayumi, Kumagaya-shi Saitama 360-0193 (JP); HAYASHI, Naoto, Kumagaya-shi Saitama 360-0193 (JP)
(74) Representative: Tran, Chi-Hai
(86) International application number: PCT/JP2017/018251
(87) International publication number: WO 2017/199923

(56) References cited:
- WO-A1-2014/199588
- WO-A1-2015/064106
- WO-A1-2016/051732
- JP-A- S61 205 511
- JP-A- 2003 159 929
- JP-A- 2004 009 875
- US-A1- 2015 107 815

## Description

### Technical Field

The present invention relates to a vehicle air conditioner and a control method for a vehicle air conditioner.

### Background Art

The vehicle air conditioner disclosed in, for example, PTL 1 is known as a vehicle air conditioner having upper and lower two air passages. This type of air conditioner has one cooling heat exchanger (evaporator) and one heating heat exchanger (heater core), in which the air flowing through the upper air passage is capable of passing through the upper parts of the cooling heat exchanger and the heating heat exchanger and the air flowing through the lower air passage is capable of passing through the lower parts of the cooling heat exchanger and the heating heat exchanger.

On the exit side of the cooling heat exchanger, temperature adjusting doors are provided in the upper air passage and the lower air passage. The temperature adjusting doors can adjust the temperature of air to be blown out of the air conditioner into the vehicle cabin by adjusting the bypass ratio, which is the ratio of the volume of air flowing to the downstream side of the heating heat exchanger by bypassing the heating heat exchanger to the total volume of air having flowed out of the cooling heat exchanger.

When, for example, the full automatic operation (full automatic heating operation) of the air conditioner is started in the state in which the vehicle cabin is cold in winter, the orientations of the temperature adjusting doors are first adjusted so that substantially all of air flows through the heating heat exchanger. At this time, the blowout mode is set to a defrost mode in which all or substantially all of the blown out air is blown out of the defroster blowout port to ensure the visibility of the driver at the highest priority for safety reasons.

After that, the orientations of the temperature adjusting doors are adjusted so as to lower the temperature of blown out air as the air temperature in the vehicle cabin rises. When the orientations of the temperature adjusting doors are changed in the defrost mode to prevent part of the air flowing out of the cooling heat exchanger from passing through the heating heat exchanger, depending on the air passage layout of the air conditioner, the cold air having flowed out of the cooling heat exchanger flows into the defroster blowout passage without being sufficiently mixed with the hot air flowing out of the heating heat exchanger, is blown against the front glass through the defroster blowout port, causes condensation on the front glass, and possibly interrupts the visibility of the driver. Such a phenomenon is referred to as "cool defrosting", which needs to be avoided at the highest priority for safety reasons.

The methods for avoiding cool defrosting are described in PTL 2 and PTL 3. The air conditioner in PTL 2 prevents the cold air having flowed out of the cooling heat exchanger from directly flowing into the defroster blowout passage by providing a rib in the defroster door provided at the inlet of the defroster blowout passage. In this structure, however, when the defroster door is fully opened, the rib functions as a resistance against an air flow. In addition, the rib increases the track range of the defroster door, thereby hindering the size reduction of the air conditioner.

The device in PTL 3 has a door for preventing the cold air having flowed out of the cooling heat exchanger from directly flowing into the defroster blowout passage separately from the defroster door, in a flow channel of the cold air. However, this new door hinders the size reduction of the air conditioner and increases the production cost of the air conditioner. PTL4 to PTL5 disclose a vehicle air conditioner suitable for sending air streams of different temperatures into a vehicle cabin.

### Citation List

### Patent Literature

PTL 1: JP-A-10-016531
PTL 2: JP-A-2004-042803
PTL 3: JP-A-2007-131280
PTL 4: WO 2016/051732 A1
PTL 5: US 2015/107815 A1
PTL 6: WO 2014/199588 A1
PTL 7: WO 2015/064106 A1

### Summary of Invention

### Technical Problem

An object of the invention is to provide a vehicle air conditioner and a control method for a vehicle air conditioner, avoiding cool defrosting when gradually lowering the temperature of conditioned air to be supplied to a vehicle cabin while a heating startup control is performed.

### Solution to Problem

According to an embodiment of the invention, there is provided a vehicle air conditioner for conditioning air in a vehicle cabin, the vehicle air conditioner including a case; an upper air blowing path and a lower air blowing path that are provided in the case; a wall that separates the upper air blowing path and the lower air blowing path from each other; a cooling heat exchanger having an upper part and a lower part positioned in the upper air blowing path and the lower air blowing path, respectively; a heating heat exchanger having an upper part and a lower part positioned in the upper air blowing path and the lower air blowing path, respectively, on a downstream side of the cooling heat exchanger; an upper bypass channel that is provided in the upper air blowing path, the upper bypass channel enabling air having flowed out of the cooling heat exchanger to flow to the downstream side by bypassing the heating heat exchanger; a lower bypass channel that is provided in the lower air blowing path, the lower bypass channel enabling the air having flowed out of the cooling heat exchanger to flow to the downstream side by bypassing the heating heat exchanger; an upper temperature adjusting door that is provided in the upper air blowing path between the cooling heat exchanger and the heating heat exchanger, the upper temperature adjusting door adjusting a first bypass ratio that is a ratio of a volume of air passing through the upper bypass channel to a volume of air having flowed out of the upper part of the cooling heat exchanger; a lower temperature adjusting door that is provided in the lower air blowing path between the cooling heat exchanger and the heating heat exchanger, the lower temperature adjusting door adjusting a second bypass ratio that is a ratio of a volume of air passing through the lower bypass channel to a volume of air having flowed out of the lower part of the cooling heat exchanger; a mixing chamber to which air flowing out of the upper air blowing path and the lower air blowing path flows, the mixing chamber including an upper mixing space in which air having passed through the upper part of the heating heat exchanger is mixed with air having passed through the upper bypass channel and a lower mixing space in which air having passed through the lower part of the heating heat exchanger is mixed with air having passed through the lower bypass channel; a defroster blowout passage and a vent blowout passage that face the upper mixing space; a foot blowout passage that faces the lower mixing space; a defroster door that adjusts an opening area of the defroster blowout passage, a vent door that adjusts an opening area of the vent blowout passage, and a foot door that adjusts an opening area of the foot blowout passage; and a control unit that controls operation of at least the upper temperature adjusting door, the lower temperature adjusting door, the defroster door, the vent door, and the foot door. The control unit positions the upper temperature adjusting door and the lower temperature adjusting door so that the first bypass ratio and the second bypass ratio become substantially zero and controls the defroster door so that air having flowed through the mixing chamber is able to pass through the passage when performing a heating startup defroster blowout control, and controls the upper temperature adjusting door and the lower temperature adjusting door so that the lower temperature adjusting door is first moved to increase the second bypass ratio from zero while the upper temperature adjusting door is fixed to maintain the first bypass ratio substantially to zero when gradually lowering the temperature of conditioned air to be supplied to the vehicle cabin as the temperature in the vehicle cabin rises.

According to another embodiment of the invention, there is provided a control method for a vehicle air conditioner including an upper air blowing path and a lower air blowing path, a cooling heat exchanger having an upper part and a lower part positioned in the upper air blowing path and the lower air blowing path, respectively, a heating heat exchanger having an upper part and a lower part positioned in the upper air blowing path and the lower air blowing path, respectively, on a downstream side of the cooling heat exchanger, an upper bypass channel that is provided in the upper air blowing path, the upper bypass channel enabling air having flowed out of the cooling heat exchanger to flow to the downstream side by bypassing the heating heat exchanger, a lower bypass channel that is provided in the lower air blowing path, the lower bypass channel enabling the air having flowed out of the cooling heat exchanger to flow to the downstream side by bypassing the heating heat exchanger, an upper temperature adjusting door that is provided in the upper air blowing path between the cooling heat exchanger and the heating heat exchanger, the upper temperature adjusting door adjusting a first bypass ratio that is a ratio of a volume of air passing through the upper bypass channel to a volume of air having flowed out of the upper part of the cooling heat exchanger, a lower temperature adjusting door that is provided in the lower air blowing path between the cooling heat exchanger and the heating heat exchanger, the lower temperature adjusting door adjusting a second bypass ratio that is a ratio of a volume of air passing through the lower bypass channel to a volume of air having flowed out of the lower part of the cooling heat exchanger, a mixing chamber to which air flowing out of the upper air blowing path and the lower air blowing path flows, the mixing chamber including an upper mixing space in which air having passed through the upper part of the heating heat exchanger is mixed with air having passed through the upper bypass channel and a lower mixing space in which air having passed through the lower part of the heating heat exchanger is mixed with air having passed through the lower bypass channel, a defroster blowout passage and a vent blowout passage that face the upper mixing space, a foot blowout passage that faces the lower mixing space, a defroster door that adjusts an opening area of the defroster blowout passage, a vent door that adjusts an opening area of the vent blowout passage, and a foot door that adjusts an opening area of the foot blowout passage. This control method comprises the following steps: positioning the upper temperature adjusting door and the lower temperature adjusting door so that the first bypass ratio and the second bypass ratio become substantially zero and controlling the defroster door so that air having flowed through the mixing chamber is able to pass through the defroster blowout passage when a heating startup control is performed; and the control method further comprises a step of controlling the upper temperature adjusting door and the lower temperature adjusting door so that the lower temperature adjusting door is first moved to increase the second bypass ratio from zero while the upper temperature adjusting door is fixed to maintain the first bypass ratio substantially to zero when the temperature of conditioned air to be supplied to a vehicle cabin is gradually lowered as the temperature in the vehicle cabin rises.

### Advantageous Effects of Invention

According to the above embodiments of the invention, a cool defrosting phenomenon can be prevented without providing additional mechanisms and members, that is, without increasing the size and production cost of an air conditioner.

### Brief Description of Drawings

[Fig. 1] Fig. 1 is a schematic view illustrating an entire structure of a vehicle air conditioner according to an embodiment of the invention.
[Fig. 2] Fig. 2 is a schematic view illustrating the states of individual doors after starting of heating during full automatic operation.
[Fig. 3] Fig. 3 is a timing chart illustrating the states of the individual doors after starting of heating during full automatic operation.
[Fig. 4] Fig. 4 is a schematic perspective view illustrating another example of disposition of bypass channels.

### Description of Embodiments

Embodiments of the invention will be described with reference to the attached drawings.

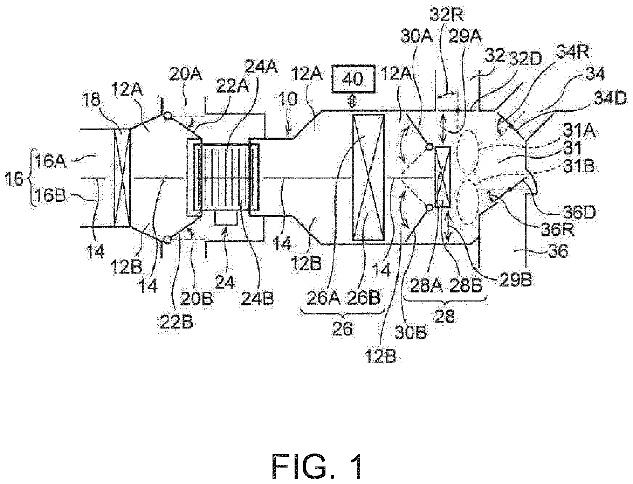

As illustrated in Fig. 1, the vehicle air conditioner for conditioning air in the vehicle cabin has a case 10. An upper air blowing path 12A and a lower air blowing path 12B are provided in the case 10. The upper air blowing path 12A is stacked on the lower air blowing path 12B and a wall 14 provided therebetween separates them from each other.

The case 10 is provided with an outside air introduction part 16 having an upper outside air introduction port 16A and a lower outside air introduction port 16B. Outside air can be introduced to the upper air blowing path 12A via the upper outside air introduction port 16A and outside air can be introduced to the lower air blowing path 12B via the lower outside air introduction port 16B.

An air filter 18 is provided immediately on the downstream side of the outside air introduction part 16. An upper part of the air filter 18 is positioned in the upper air blowing path 12A and a lower part of the air filter 18 is positioned in the lower air blowing path 12B.

The case 10 further has inside air introduction ports 20A and 20B. Air in the vehicle cabin can be introduced to the upper air blowing path 12A and the lower air blowing path 12B via the inside air introduction ports 20A and 20B, respectively. The inside air introduction ports 20A and 20B are provided with switching doors 22A and 22B, respectively. By switching the positions of the switching doors 22A and 22B, the air flowing through the upper air blowing path 12A and the lower air blowing path 12B toward the downstream side may be one of outside air and inside air or mixture of outside air and inside air.

The vehicle air conditioner has a blower unit 24. The blower unit 24 has an upper fan 24A that forms an air flow in the upper air blowing path 12A and a lower fan 24B that forms an air flow in the lower air blowing path 12B.

On the downstream side of the blower unit 24, a cooling heat exchanger (evaporator) 26 is provided in the case 10. An upper part 26A of the cooling heat exchanger 26 is positioned in the upper air blowing path 12A and a lower part 26B of the cooling heat exchanger 26 is positioned in the lower air blowing path 12B. The cooling heat exchanger 26 absorbs heat from air flowing therethrough and reduces the humidity of the air when the humidity of the air is high.

On the downstream side of the cooling heat exchanger 26, a heating heat exchanger (heater core) 28 is provided in the case 10. An upper part 28A of the heating heat exchanger 28 is positioned in the upper air blowing path 12A and a lower part 28B of the heating heat exchanger 28 is positioned in the lower air blowing path 12B. The heating heat exchanger 28 heats the air flowing therethrough.

The upper part 28A of the heating heat exchanger 28 does not occupy the all cross section of the upper air blowing path 12A. The region of the upper air blowing path 12A in which the heating heat exchanger 28 is not present is a bypass channel 29A that enables the air flowing through the upper air blowing path 12A to pass toward the downstream side of the heating heat exchanger 28 without passing through the upper part 28A of the heating heat exchanger 28 (by bypassing the upper part 28A). This bypass channel is referred to as the "upper bypass channel 29A" because it is provided in the "upper" air blowing path 12A.

Similarly, the lower part 28B of the heating heat exchanger 28 does not occupy all cross section of the lower air blowing path 12B. The region of the lower air blowing path 12B in which the heating heat exchanger 28 is not present is a bypass channel 29B that enables the air flowing through the lower air blowing path 12B to pass toward the downstream side of the heating heat exchanger 28 without passing through the lower part 28B of the heating heat exchanger 28 (by bypassing the lower part 28B). This bypass channel is referred to as the "lower bypass channel 29B" because it is provided in the "lower" air blowing path 12B.

In the embodiment illustrated in Fig. 1, the upper bypass channel 29A is provided in an upper region of the upper air blowing path 12A and the lower bypass channel 29B is provided in a lower region of the lower air blowing path 12B.

The upper air blowing path 12A and the lower air blowing path 12B are provided with an upper temperature adjusting door 30A and a lower temperature adjusting door 30B, respectively, between the cooling heat exchanger 26 and the heating heat exchanger 28. The upper temperature adjusting door 30A is pivotable about a pivot shaft line extending horizontally (orthogonally to the sheet of Fig. 1), thereby enabling the adjustment of a first bypass ratio (QUcool/QUtotal), which is the ratio of the volume of air (QUcool) passing through the upper bypass channel 29A (that is, the volume of air bypassing the heating heat exchanger 28) to the volume of air (QUtotal) (total volume) flowing out of the upper part 26A of the cooling heat exchanger 26. Similarly, the lower temperature adjusting door 30B is pivotable about a pivot shaft line extending horizontally, thereby enabling the adjustment of a second bypass ratio (QLcool/QLtotal), which is the ratio of the volume of air (QLcool) passing through the lower bypass channel 29B (that is, the volume of air bypassing the heating heat exchanger 28) to the volume of air (QLtotal) (total volume) flowing out of the lower part 26B of the cooling heat exchanger 26.

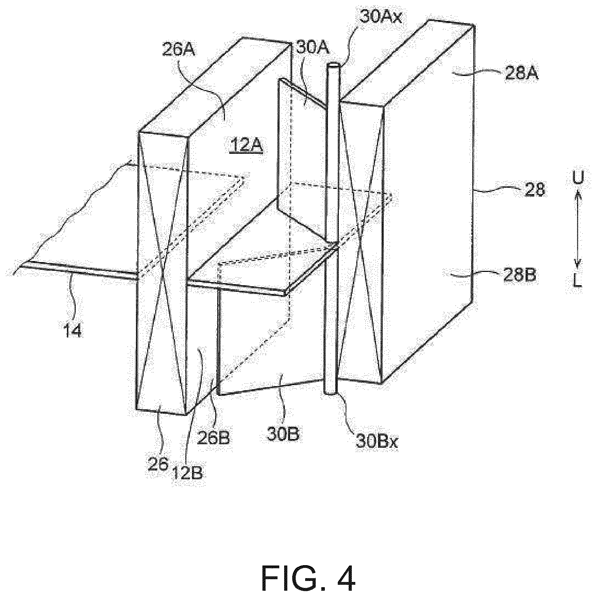

The dispositions of the upper bypass channel 29A and the lower bypass channel 29B are not limited to those illustrated in Fig. 1 and, as illustrated in, for example, Fig. 4, the upper bypass channel 29A may be provided on the side of the upper air blowing path 12A and the lower bypass channel 29B may be provided on the side of the lower air blowing path 12B. In this case, the upper temperature adjusting door 30A is provided so as to pivot about a pivot shaft line 30AX extending in the vertical direction and the lower temperature adjusting door 30B is provided so as to pivot about a pivot shaft line 30BX extending in the vertical direction. In Fig. 4, an arrow U-L represents the up-down (vertical) direction.

In a mixing chamber 31 formed on the downstream side of the heating heat exchanger 28 in the case 10, the air having flowed through the upper air blowing path 12A is mixed with the air having flowed through the lower air blowing path 12B. In addition, in mainly an upper mixing space 31A of the mixing chamber 31, of the air having flowed through the upper air blowing path 12A, the air having passed through the upper part 28A of the heating heat exchanger 28 is mixed with the air having bypassed the upper part 28A of the heating heat exchanger 28 and having passed through the upper bypass channel 29A. In addition, in mainly a lower mixing space 31B of the mixing chamber 31, of the air having flowed through the lower air blowing path 12B, the air having passed through the lower part 28B of the heating heat exchanger 28 is mixed with the air having bypassed the lower part 28B of the heating heat exchanger 28 and having passed through the lower bypass channel 29B.

A defroster blowout passage 32 and a vent blowout passage 34 face the upper mixing space 31A. A foot blowout passage 36 faces the lower mixing space 31B. Although the air is mixed as described above in the mixing chamber 31, such disposition makes the air having flowed into the mixing chamber 31 through the upper air blowing path 12A apt to enter the defroster blowout passage 32 and the vent blowout passage 34 and the air having flowed into the mixing chamber 31 through the lower air blowing path 12B apt to enter the foot blowout passage 36.

The downstream end of the defroster blowout passage 32 is connected to a defroster blowout port (not illustrated) that blows out air toward the inner surface of the front glass in the vehicle cabin. The downstream end of the vent blowout passage 34 is connected to a vent blowout port (not illustrated) that blows out air toward the upper bodies of occupants in the driver seat and the passenger seat (and the rear seat in some cases). The downstream end of the foot blowout passage 36 is connected to a foot blowout port (not illustrated) that blows out air toward the feet of occupants in the driver seat and the passenger seat (and the rear seat in some cases).

The defroster blowout passage 32, the vent blowout passage 34, and the foot blowout passage 36 (the inlet portions of these blowout passages 32, 34, and 36 in the example of the drawing) are provided with a defroster door 32D, a vent door 34D, and a foot door 36D, respectively, for adjusting the opening areas of these blowout passages 32, 34, and 36.

The upper temperature adjusting door 30A, the lower temperature adjusting door 30B, the defroster door 32D, the vent door 34D, and the foot door 36D are driven by an actuator (not illustrated) controlled by a control unit 40 including an in-vehicle microcomputer and the like and these doors can be stopped in any pivot positon. The control unit 40 may be provided as a part of the vehicle air conditioner or may be provided as a part of a vehicle in which the vehicle air conditioner is installed and both forms can be adopted in the invention.

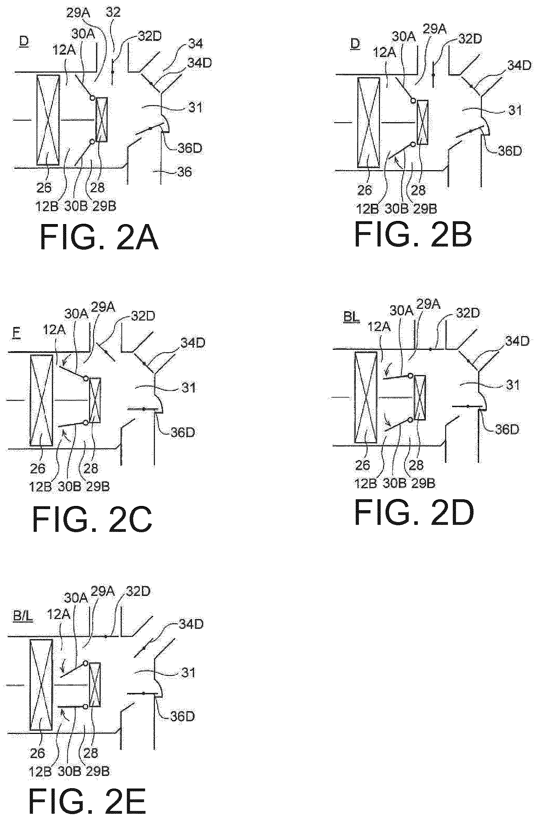

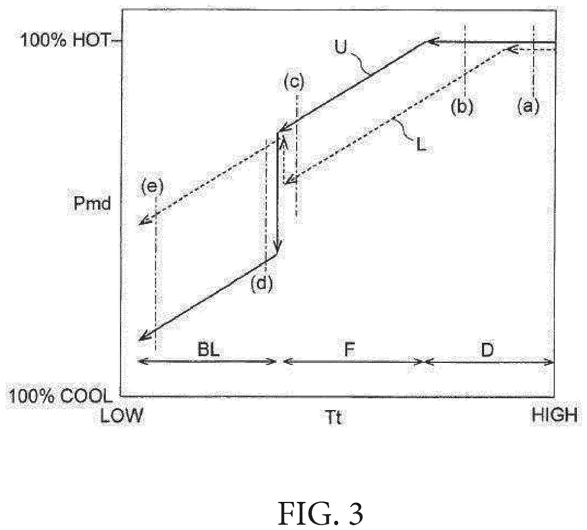

The following describes the operation of the air conditioner when control (this control is referred to below as "heating startup control") during full automatic heating operation is made in the state in which the vehicle cabin is cold, with reference to mainly Fig. 2 and Fig. 3. The states illustrated in Figs. 2(a) to 2(e) correspond to (a) to (e) in the chart of Fig. 3, respectively. In the chart of Fig. 3, the horizontal axis represents the target blowout temperature (the target value of the average temperature of air flowing out of the blowout passages 32, 34, and 36 into the vehicle cabin) and the vertical axis represents the position of the upper temperature adjusting door 30A (lower temperature adjusting door 30B). In the chart of Fig. 3, the solid line indicated by a symbol U represents the position of the upper temperature adjusting door 30A and the dashed line indicated by a symbol L represents the position of the lower temperature adjusting door 30B.

100% HOT on the vertical axis in the chart of Fig. 3 represents the position in which all of the air flowing out of the upper part 26A (lower part 26B) of the cooling heat exchanger 26 flows into the upper part 28A (lower part 28B) of the heating heat exchanger 28 without passing through the upper bypass channel 29A (lower bypass channel 29B), that is, the first bypass ratio (QUcool/QUtotal) (the second bypass ratio (QLcool/QLtotal)) becomes 0%. 100% COOL represents the position in which all of the air flowing out of the upper part 26A (lower part 26B) of the cooling heat exchanger 26 flows through the upper bypass channel 29A (lower bypass channel 29B) and none of the air flows into the upper part 28A (lower part 28B) of the heating heat exchanger 28, that is, the first bypass ratio (QUcool/QUtotal) (the second bypass ratio (QLcool/QLtotal)) becomes 100%. In the positions of 100% HOT and 100% COOL, the first bypass ratio (QUcool/QUtotal) (second bypass ratio (QLcool/QLtotal)) varies between 0% and 100% depending on the position of the upper temperature adjusting door 30A (lower temperature adjusting door 30B). Since a bypass ratio of 0% or 100% is a target control value, even if, for example, unavoidable leakage of air occurs due to a minute clearance in the vicinity of the upper temperature adjusting door 30A (lower temperature adjusting door 30B), the actual bypass ratio is assumed to be substantially 0% or 100% without taking the effect into consideration.

After the air conditioner starts up, the air conditioner first operates in the defrost mode. In the range indicated by an arrow D in the lower part of the chart of Fig. 3, the air conditioner operates in the defrost mode. In this defrost mode, as illustrated by Fig. 2 (a) and (a) in the chart of Fig. 3, the upper temperature adjusting door 30A and the lower temperature adjusting door 30B are positioned so that all of the air having flowed out of the cooling heat exchanger 26 flows into the heating heat exchanger 28 and none of the air passes through the upper bypass channel 29A and the lower bypass channel 29B, that is, both the first bypass ratio (QUcool/QUtotal) and the second bypass ratio (QLcool/QLtotal) become zero. In addition, the defroster door 32D is fully opened and the vent door 34D is fully closed. The foot door 36D is fully closed or opened with a minute opening degree. Specifically, the opening degree of the foot door 36D is approximately 0% to 10%. Accordingly, at this time, the high temperature air having flowed through the mixing chamber 31 is blown out against the inner surface of the front glass from the defroster blowout port at a large flow rate. In addition, depending on the opening degree of the foot door 36D, the high temperature air is blown out at a minute flow rate or is not blown out of the foot blowout port.

Here, the opening degree of the foot door 36D is the ratio (percentage) of the opening area of the foot blowout passage 36 at a certain time to the opening area of the foot blowout passage 36 when the foot blowout passage 36 is fully opened, as seen from the center axis line. The opening degrees of the defroster door 32D and the vent door 34D are defined similarly.

As the air temperature (in-vehicle cabin temperature) in the vehicle cabin rises, the temperature of air (conditioned air) to be blown out to the vehicle cabin is lowered gradually. At this time, as illustrated in Fig. 2 (b) and the vicinity of (b) in the chart of Fig. 3, the lower temperature adjusting door 30B is first moved while the position of the upper temperature adjusting door 30A is fixed (that is, while the first bypass ratio (QUcool/QUtotal) is maintained) to increase the second bypass ratio (QLcool/QLtotal) from zero. Although the air flowing into the mixing chamber 31 through the upper air blowing path 12A easily flows into the defroster blowout passage 32 directly, the temperature of this air is high as in (a) in the chart of Fig. 3. The low temperature air having passed through the bypass channel 29B of the lower air blowing path 12B and flowed into the mixing chamber is mixed with the high temperature air having flowed out of the lower part 28B of the heating heat exchanger 28 in the lower mixing space 31B and then further mixed with the high temperature air having flowed out of the upper air blowing path 12A in the upper mixing space 31A. Accordingly, the low temperature air having passed through the bypass channel 29B of the lower air blowing path 12B and flowed into the mixing chamber 31 does not flow into the defroster blowout passage 32 with its temperature kept low. Accordingly, it is possible to prevent cool defrosting caused when the low temperature air flows into the defroster blowout passage 32.

As the air temperature in the vehicle cabin rises, the temperature of air to be blown out to the vehicle cabin is further lowered gradually. When the air temperature in the vehicle cabin exceeds a predetermined threshold, the operation mode of the air conditioner is switched from the defrost mode to the foot mode (also referred to as the def/foot mode). In the range indicated by an arrow F in the lower part of the chart of Fig. 3, the air conditioner operates in the foot mode. In switching to the foot mode, the opening degree of the defroster door 32D is reduced and the foot door 36D is opened while the vent door 34D remains fully closed. The opening degrees of the defroster door 32D and the foot door 36D are adjusted so that approximately 80% of the total volume of air blown out to the vehicle cabin is blown out through the foot blowout port and the remaining 20% is blown out through the defroster blowout port. The ratio between the volumes of air blown out of the foot blowout port and the defroster blowout port may be changed as long as the volume of air blown out of the foot blowout port is larger than the volume of air blown out of the defroster blowout port.

The movement of the upper temperature adjusting door 30A is started substantially simultaneously with the switching of the operation mode from the defrost mode to the foot mode to increase the first bypass ratio (QUcool/QUtotal). That is, after switching to the foot mode, when the temperature of air to be blown into the vehicle cabin is lowered as the air temperature in the vehicle cabin rises, both the second bypass ratio (QLcool/QLtotal) and the first bypass ratio (QUcool/QUtotal) are increased at the same time by moving both the lower temperature adjusting door 30B and the upper temperature adjusting door 30A while keeping the second bypass ratio (QLcool/QLtotal) larger than the first bypass ratio (QUcool/QUtotal) as illustrated in Fig. 2 (c) and (c) in the chart of Fig. 3 and the region to the right of (c).

Although the low temperature air having passed through the bypass channel 29A of the upper air blowing path 12A flows into the upper part of the mixing chamber 31 in the foot mode, since the opening area of the defroster blowout passage 32 is small, the low temperature air does not easily enter the defroster blowout passage 32 directly and is apt to flow into the defroster blowout passage 32 after being mixed with the air having flowed out of the upper part 28A of the heating heat exchanger 28 in the upper mixing space 31A (see Fig. 1) of the mixing chamber 31. Accordingly, cool defrosting does not occur after switching to the foot mode.

As the air temperature in the vehicle cabin rises, the temperature of air to be blown out to the vehicle cabin is further lowered gradually. When the air temperature in the vehicle cabin exceeds a predetermined threshold, the operation mode of the air conditioner is switched from the foot mode to the bi-level mode. In the range indicated by an arrow BL in the lower part of the chart of Fig. 3, the air conditioner operates in the bi-level mode. In switching to the bi-level mode, the defroster door 32D is closed and the vent door 34D is opened while the foot door 36D remains opened. The opening degrees of the vent door 34D and the foot door 36D are adjusted so that, for example, approximately 60% of the total volume of air to be blown into the vehicle cabin is blown out of the foot blowout port and the remaining 40% is blown out of the vent blowout port. The ratio between the volumes of air blown out of the foot blowout port and the vent blowout port may be changed.

Substantially simultaneously with the switching of the operation mode from the foot mode to the bi-level mode, the upper temperature adjusting door 30A and the lower temperature adjusting door 30B are moved at relatively high speed to reverse the magnitude relationship between the first bypass ratio (QUcool/QUtotal) and the second bypass ratio (QLcool/QLtotal) so that the second bypass ratio (QLcool/QLtotal) becomes smaller than the first bypass ratio (QUcool/QUtotal) (compare (c) with (d) in Fig. 2 and (c) with (d) in the chart of Fig. 3). With this, relatively warm air flows into the lower mixing space 31B close to the foot blowout passage 36 and relatively cold air flows into the upper mixing space 31A close to the vent blowout passage 34. This achieves a comfortable air conditioning state in which the head is cooled and the feet are heated.

After that, as the air temperature in the vehicle cabin rises, the temperature of air to be blown out to the vehicle cabin is further lowered. At this time, as illustrated in Fig. 2 (e) and (e) in the chart of Fig. 3 and the region to the right of (e), both the second bypass ratio (QLcool/QLtotal) and the first bypass ratio (QUcool/QUtotal) are reduced at the same time by moving both the lower temperature adjusting door 30B and the upper temperature adjusting door 30A while keeping the second bypass ratio (QLcool/QLtotal) smaller than the first bypass ratio (QUcool/QUtotal).

When the temperature in the vehicle cabin further rises and reaches a predetermined threshold after switching to the bi-level mode, the heating startup control ends and the control mode is switched to normal temperature control.

It should be noted here that, in the heating startup control described above, in any of the defrost mode, the foot mode, and the bi-level mode, the switching doors 22A and 22B are switched so that, preferably, outside air (relatively low temperature and low humidity) is introduced to the upper air blowing path 12A and inside air (relatively high temperature and high humidity) is introduced to the lower air blowing path 12B. This reduces the humidity of air blown out of the defroster blowout port and the vent blowout port, thereby providing an advantage in ensuring visibility. This also increases the temperature of the air, blown out of the foot blowout port, that does not need to have low humidity, thereby providing an advantage in comfort of occupants.

Since cool defrosting can be prevented without providing an additional device such as an auxiliary door in the defroster blowout passage or providing a rib in the defroster door in the above embodiment, the size reduction of the air conditioner is not hindered and the production cost of the air conditioner does not increase.

### Reference Signs List

- 10:: case
- 12A:: upper air blowing path
- 12B:: lower air blowing path
- 14:: wall
- 26:: cooling heat exchanger
- 26A:: upper part of cooling heat exchanger
- 26B:: lower part of cooling heat exchanger
- 28:: heating heat exchanger
- 28A:: upper part of heating heat exchanger
- 28B:: lower part of heating heat exchanger
- 29A:: upper bypass channel
- 29B:: lower bypass channel
- 30A:: upper temperature adjusting door
- 30B:: lower temperature adjusting door
- 31:: mixing chamber
- 31A:: upper mixing space in mixing chamber
- 31B:: lower mixing space in mixing chamber
- 32:: defroster blowout passage
- 32D:: defroster door
- 34:: vent blowout passage
- 34D:: vent door
- 36:: foot blowout passage
- 36D:: foot door
- 40:: control unit

## Claims

1. A vehicle air conditioner for conditioning air in a vehicle cabin, the vehicle air conditioner comprising:
a case (10);
an upper air blowing path (12A) and a lower air blowing path (12B) that are provided in the case (10);
a wall (14) that separates the upper air blowing path (12A) and the lower air blowing path (12B) from each other;
a cooling heat exchanger (26) having an upper part (26A) and a lower part (26B) positioned in the upper air blowing path (12A) and the lower air blowing path (12B), respectively;
a heating heat exchanger (28) having an upper part (28A) and a lower part (28B) positioned in the upper air blowing path (12A) and the lower air blowing path (12B), respectively, on a downstream side of the cooling heat exchanger (26);
an upper bypass channel (29A) that is provided in the upper air blowing path (12A), the upper bypass channel (29A) enabling air having flowed out of the cooling heat exchanger (26) to flow to the downstream side by bypassing the heating heat exchanger (28);
a lower bypass channel (29B) that is provided in the lower air blowing path (12B), the lower bypass channel (29B) enabling the air having flowed out of the cooling heat exchanger (26) to flow to the downstream side by bypassing the heating heat exchanger (28);
an upper temperature adjusting door (30A) that is provided in the upper air blowing path (12A) between the cooling heat exchanger (26) and the heating heat exchanger (28), the upper temperature adjusting door (30A) adjusting a first bypass ratio that is a ratio of a volume of air passing through the upper bypass channel (29A) to a volume of air having flowed out of the upper part (26A) of the cooling heat exchanger (26);
a lower temperature adjusting door (30B) that is provided in the lower air blowing path (12B) between the cooling heat exchanger (26) and the heating heat exchanger (28), the lower temperature adjusting door (30B) adjusting a second bypass ratio that is a ratio of a volume of air passing through the lower bypass channel (29B) to a volume of air having flowed out of the lower part (26B) of the cooling heat exchanger (26);
a mixing chamber (31) to which air flowing out of the upper air blowing path (12A) and the lower air blowing path (12B) flows, the mixing chamber (31) including an upper mixing space (31A) in which air having passed through the upper part (28A) of the heating heat exchanger (28) is mixed with air having passed through the upper bypass channel (29A) and a lower mixing space (31B) in which air having passed through the lower part (28B) of the heating heat exchanger is mixed with air having passed through the lower bypass channel (29B);
a defroster blowout passage (32) and a vent blowout passage (34) that face the upper mixing space (31A);
a foot blowout passage (36) that faces the lower mixing space (31B);
a defroster door (32D) that adjusts an opening area of the defroster blowout passage (32), a vent door (34D) that adjusts an opening area of the vent blowout passage (34) and a foot door (36D) that adjusts an opening area of the foot blowout passage (36); and
a control unit (40) that controls operation of at least the upper temperature adjusting door (30A), the lower temperature adjusting door (30B), the defroster door (32D), the vent door (34D), and the foot door (36D)
wherein the control unit (40) positions the upper temperature adjusting door (30A) and the lower temperature adjusting door (30B) so that both the first bypass ratio and the second bypass ratio become substantially zero and controls the defroster door (32D) so that air having flowed through the mixing chamber (31) is able to pass through the defroster blowout passage (32) when performing a heating startup control, **characterized in that** the control unit (40) controls the upper temperature adjusting door (30A) and the lower temperature adjusting door (30B) so that the lower temperature adjusting door (30B) is first moved to increase the second bypass ratio from zero while the upper temperature adjusting door (30A) is fixed to maintain the first bypass ratio substantially to zero when gradually lowering the temperature of conditioned air to be supplied to the vehicle cabin as the temperature in the vehicle cabin rises.

2. The vehicle air conditioner according to claim 1,
wherein the control unit (40) controls the foot door (36D) so that the air having flowed through the mixing chamber (31) is also able to pass through the foot blowout passage (36) when positioning the upper temperature adjusting door (30A) and the lower temperature adjusting door (30B) so that both the first bypass ratio and the second bypass ratio become substantially zero and controlling the defroster door (32D) so that the air having flowed through the mixing chamber (31) is able to pass through the defroster blowout passage (32).

3. The vehicle air conditioner according to claim 1 or 2,
wherein the control unit (40) controls the upper temperature adjusting door (30A) and the lower temperature adjusting door (30B) so as to increase the second bypass ratio and the first bypass ratio while keeping the second bypass ratio larger than the first bypass ratio when further lowering the temperature of the conditioned air to be supplied to the vehicle cabin as the temperature in the vehicle cabin rises since the heating startup control continues.

4. The vehicle air conditioner according to claim 3,
wherein, when the temperature in the vehicle cabin further rises since the heating startup control continues, the control unit (40) controls the defroster door (32D), the vent door (34D), and the foot door (36D) so that the air having flowed through the mixing chamber (31) is unable to pass through the defroster blowout passage (32) and able to pass through the vent blowout passage (34) and the foot blowout passage (36) and controls the upper temperature adjusting door (30A) and the lower temperature adjusting door (30B) so that the first bypass ratio becomes larger than the second bypass ratio.

5. A control method for a vehicle air conditioner including an upper air blowing path (12A) and a lower air blowing path (12B), a cooling heat exchanger (26) having an upper part (26A) and a lower part (26B) positioned in the upper air blowing path (12A) and the lower air blowing path (12B), respectively, a heating heat exchanger (28) having an upper part (28A) and a lower part (28B) positioned in the upper air blowing path (12A) and the lower air blowing path (12B), respectively, on a downstream side of the cooling heat exchanger (26), an upper bypass channel (29A) that is provided in the upper air blowing path (12A), the upper bypass channel (29A) enabling air having flowed out of the cooling heat exchanger (26) to flow to the downstream side by bypassing the heating heat exchanger (28), a lower bypass channel (29B) that is provided in the lower air blowing path (12B), the lower bypass channel (29B) enabling the air having flowed out of the cooling heat exchanger (26) to flow to the downstream side by bypassing the heating heat exchanger (28), an upper temperature adjusting door (30A) that is provided in the upper air blowing path (12A) between the cooling heat exchanger (26) and the heating heat exchanger (28), the upper temperature adjusting door (30A) adjusting a first bypass ratio that is a ratio of a volume of air passing through the upper bypass channel (29A) to a volume of air having flowed out of the upper part (26A) of the cooling heat exchanger (26), a lower temperature adjusting door (30B) that is provided in the lower air blowing path (12B) between the cooling heat exchanger (26) and the heating heat exchanger (28), the lower temperature adjusting door (30B) adjusting a second bypass ratio that is a ratio of a volume of air passing through the lower bypass channel (29B) to a volume of air having flowed out of the lower part (26B) of the cooling heat exchanger (26), a mixing chamber (31) to which air flowing out of the upper air blowing path (12A) and the lower air blowing path (12B) flows, the mixing chamber (31) including an upper mixing space (31A) in which air having passed through the upper part (28A), of the heating heat exchanger (28) is mixed with air having passed through the upper bypass channel (29A) and a lower mixing space (31B) in which air having passed through the lower part (28B), of the heating heat exchanger (28) is mixed with air having passed through the lower bypass channel (29B), a defroster blowout passage (32) and a vent blowout passage (34) that face the upper mixing space (31A), a foot blowout passage (36) that faces the lower mixing space (31B), a defroster door (32D) that adjusts an opening area of the defroster blowout passage (32), a vent door (34D) that adjusts an opening area of the vent blowout passage (34), and a foot door (36D) that adjusts an opening area of the foot blowout passage (36), the control method comprising the following steps:
positioning the upper temperature adjusting door (30A) and the lower temperature adjusting door (30B) so that the first bypass ratio and the second bypass ratio become substantially zero and controlling the defroster door (32D) so that air having flowed through the mixing chamber (31) is able to pass through the defroster blowout passage (32) when a heating startup control is performed;
**characterized in that** the control method further comprises a step of controlling the upper temperature adjusting door (30A) and the lower temperature adjusting door (30B) so that the lower temperature adjusting door (30B) is first moved to increase -the second bypass ratio from zero while the upper temperature adjusting door (30A) is fixed to maintain the first bypass ratio substantially to zero when the temperature of conditioned air to be supplied to a vehicle cabin is gradually lowered as the temperature in the vehicle cabin rises.

6. The control method according to claim 5,
wherein the foot door (36D) is controlled so that the air having flowed through the mixing chamber (31) is also able to pass through the foot blowout passage (36) when the upper temperature adjusting door (30A) and the lower temperature adjusting door (30B) are positioned so that the first bypass ratio and the second bypass ratio become substantially zero and the defroster door (32D) is controlled so that the air having flowed through the mixing chamber (31) is able to pass through the defroster blowout passage (32).

7. The control method according to claim 5 or 6,
wherein the upper temperature adjusting door (30A) and the lower temperature adjusting door (30B) are controlled so that the second bypass ratio and the first bypass ratio increase while the second bypass ratio is kept larger than the first bypass ratio when the temperature of the conditioned air to be supplied to the vehicle cabin is further lowered as the temperature in the vehicle cabin rises since the heating startup control continues.

8. The control method according to claim 7, controlling the vehicle air conditioner according to claim 3,
wherein, when the temperature in the vehicle cabin further rises since the heating startup control continues, the defroster door (32D), the vent door (34D), and the foot door (36D) are controlled so that the air having flowed through the mixing chamber (31) is unable to pass through the defroster blowout passage (32) and able to pass through the vent blowout passage (34) and the foot blowout passage (36) and the upper temperature adjusting door (30A) and the lower temperature adjusting door (30B) are controlled so that the first bypass ratio becomes larger than the second bypass ratio.

## Patentansprüche

1. Fahrzeugklimaanlage zum Klimatisieren von Luft in einem Fahrzeuginnenraum, wobei die Fahrzeugklimaanlage Folgendes umfasst:
ein Gehäuse (10);
einen oberen Luftblasweg (12A) und einen unteren Luftblasweg (12B), die in dem Gehäuse (10) vorgesehen sind;
eine Wand (14), die den oberen Luftblasweg (12A) und den unteren Luftblasweg (12B) voneinander trennt;
einen Kühlungs-Wärmetauscher (26), der einen oberen Teil (26A) und einen unteren Teil (26B), die in dem oberen Luftblasweg (12A) bzw. dem unteren Luftblasweg (12B) positioniert sind, aufweist;
einen Heiz-Wärmetauscher (28), der einen oberen Teil (28A) und einen unteren Teil (28B), die in dem oberen Luftblasweg (12A) bzw. dem unteren Luftblasweg (12B) positioniert sind, aufweist;
auf einer stromabwärtigen Seite des Kühlungs-Wärmetauschers (26)
einen oberen Bypasskanal (29A), der in dem oberen Luftblasweg (12A) vorgesehen ist, wobei der obere Bypasskanal (29A) ermöglicht, dass Luft, die aus dem Kühlungs-Wärmetauscher (26) herausgeströmt ist, zu der stromabwärtigen Seite strömt, indem sie den Heiz-Wärmetauscher (28) umgeht;
einen unteren Bypasskanal (29B), der in dem unteren Luftblasweg (12B) vorgesehen ist, wobei der untere Bypasskanal (29B) ermöglicht, dass die Luft, die aus dem Kühlungs-Wärmetauscher (26) herausgeströmt ist, zu der stromabwärtigen Seite strömt, indem sie den Heiz-Wärmetauscher (28) umgeht;
eine in dem oberen Luftblasweg (12A) zwischen dem Kühlungs-Wärmetauscher (26) und dem Heiz-Wärmetauscher (28) vorgesehene obere Temperatureinstellungsklappe (30A), wobei die obere Temperatureinstellungsklappe (30A) ein erstes Bypass-Verhältnis einstellt, das ein Verhältnis von einem Volumen von den oberen Bypasskanal (29A) durchströmender Luft zu einem Volumen von aus dem oberen Teil (26A) des Kühlungs-Wärmetauschers (26) herausgeströmter Luft ist;
eine in dem unteren Luftblasweg (12B) zwischen dem Kühlungs-Wärmetauscher (26) und dem Heiz-Wärmetauscher (28) vorgesehene untere Temperatureinstellungsklappe (30B), wobei die untere Temperatureinstellungsklappe (30B) ein zweites Bypass-Verhältnis einstellt, das ein Verhältnis von einem Volumen von den unteren Bypasskanal (29B) durchströmender Luft zu einem Volumen von aus dem unteren Teil (26B) des Kühlungs-Wärmetauschers (26) herausgeströmter Luft ist;
eine Mischkammer (31), zu der aus dem oberen Luftblasweg (12A) und dem unteren Luftblasweg (12B) herausgeströmte Luft strömt, wobei die Mischkammer (31) einen oberen Mischraum (31A), in dem Luft, die den oberen Teil (28A) des Heiz-Wärmetauschers (28) durchströmt hat, mit Luft, die den oberen Bypasskanal (29A) durchströmt hat, vermischt wird, und einen unteren Mischraum (31B), in dem Luft, die den unteren Teil (28B) des Heiz-Wärmetauschers (28) durchströmt hat, mit Luft, die den unteren Bypasskanal (29B) durchströmt hat, vermischt wird, aufweist;
einen Defrosterausblasdurchlass (32) und einen Lüfterausblasdurchlass (34), die zu dem oberen Mischraum (31A) weisen;
einen Fußraumausblasdurchlass (36), der zu dem unteren Mischraum (31B) weist;
eine Defrosterklappe (32D), die eine Öffnungsfläche des Defrosterausblasdurchlasses (32) einstellt;
eine Lüfterklappe (34D), die eine Öffnungsfläche des Lüfterausblasdurchlasses (34) einstellt, und
eine Fußraumklappe (36D), die eine Öffnungsfläche des Fußraumausblasdurchlasses (36) einstellt; und
eine Steuereinheit (40), die Betrieb mindestens der oberen Temperatureinstellungsklappe (30A), der unteren Temperatureinstellungsklappe (30B), der Defrosterklappe (32D), der Lüfterklappe (34D) und der Fußraumklappe (36D) steuert,
wobei die Steuereinheit (40) die obere Temperatureinstellungsklappe (30A) und die untere Temperatureinstellungsklappe (30B) so positioniert, dass sowohl das erste Bypass-Verhältnis als auch das zweite Bypass-Verhältnis im Wesentlichen null werden, und die Defrosterklappe (32D) so steuert, dass Luft, die die Mischkammer (31) durchströmt hat, durch den Defrosterausblasdurchlass (32) strömen kann, wenn Heizungsstartsteuerung durchgeführt wird, **dadurch gekennzeichnet, dass** die Steuereinheit (40) die obere Temperatureinstellungsklappe (30A) und die untere Temperatureinstellungsklappe (30B) so steuert, dass die untere Temperatureinstellungsklappe (30B) zunächst dahingehend bewegt wird, das zweite Bypass-Verhältnis von null zu erhöhen, während die obere Temperatureinstellungsklappe (30A) fixiert ist, um das erste Bypass-Verhältnis im Wesentlichen auf null zu halten, wenn die Temperatur von dem Fahrzeuginnenraum bei Anstieg der Temperatur in dem Fahrzeuginnenraum zuzuführender klimatisierter Luft allmählich gesenkt wird.

2. Fahrzeugklimaanlage nach Anspruch 1,
wobei die Steuereinheit (40) die Fußraumklappe (36D) so steuert, dass die Luft, die die Mischkammer (31) durchströmt hat, auch durch den Fußraumausblasdurchlass (36) strömen kann, wenn die obere Temperatureinstellungsklappe (30A) und die untere Temperatureinstellungsklappe (30B) so positioniert werden, dass sowohl das erste Bypass-Verhältnis als auch das zweite Bypass-Verhältnis im Wesentlichen null werden, und die Defrosterklappe (32D) so gesteuert wird, dass die Luft, die die Mischkammer (31) durchströmt hat, durch den Defrosterausblasdurchlass (32) strömen kann.

3. Fahrzeugklimaanlage nach Anspruch 1 oder 2,
wobei die Steuereinheit (40) die obere Temperatureinstellungsklappe (30A) und die untere Temperatureinstellungsklappe (30B) dahingehend steuert, das zweite Bypass-Verhältnis und das erste Bypass-Verhältnis zu vergrößern, während das zweite Bypass-Verhältnis größer als das erste Bypass-Verhältnis gehalten wird, wenn die Temperatur der dem Fahrzeuginnenraum zuzuführenden klimatisierten Luft bei Anstieg der Temperatur im Fahrzeuginnenraum aufgrund von weitergehender Heizungsstartsteuerung ansteigt.

4. Fahrzeugklimaanlage nach Anspruch 3,
wobei bei Anstieg der Temperatur in dem Fahrzeuginnenraum aufgrund von weitergehender Heizungsstartsteuerung die Steuereinheit (40) die Defrosterklappe (32D), die Lüfterklappe (34D) und die Fußraumklappe (36D) so steuert, dass die Luft, die die Mischkammer (31) durchströmt hat, nicht durch den Defrosterausblasdurchlass (32) strömen kann und durch den Lüfterausblasdurchlass (34) und den Fußraumausblasdurchlass (36) strömen kann, und die obere Temperatureinstellungsklappe (30A) und die untere Temperatureinstellungsklappe (30B) so steuert, dass das erste Bypass-Verhältnis größer als das zweite Bypass-Verhältnis wird.

5. Steuerverfahren für eine Fahrzeugklimaanlage, die einen oberen Luftblasweg (12A) und einen unteren Luftblasweg (12B), einen Kühlungs-Wärmetauscher (26), der einen oberen Teil (26A) und einen unteren Teil (26B), die in dem oberen Luftblasweg (12A) bzw. dem unteren Luftblasweg (12B) positioniert sind, aufweist, einen Heiz-Wärmetauscher (28), der einen oberen Teil (28A) und einen unteren Teil (28B), die in dem oberen Luftblasweg (12A) bzw. dem unteren Luftblasweg (12B) positioniert sind, aufweist, auf einer stromabwärtigen Seite des Kühlungs-Wärmetauschers (26) einen oberen Bypasskanal (29A), der in dem oberen Luftblasweg (12A) vorgesehen ist, wobei der obere Bypasskanal (29A) ermöglicht, dass Luft, die aus dem Kühlungs-Wärmetauscher (26) herausgeströmt ist, zu der stromabwärtigen Seite strömt, indem sie den Heiz-Wärmetauscher (28) umgeht, einen unteren Bypasskanal (29B), der in dem unteren Luftblasweg (12B) vorgesehen ist, wobei der untere Bypasskanal (29B) ermöglicht, dass die Luft, die aus dem Kühlungs-Wärmetauscher (26) herausgeströmt ist, zu der stromabwärtigen Seite strömt, indem sie den Heiz-Wärmetauscher (28) umgeht, eine in dem oberen Luftblasweg (12A) zwischen dem Kühlungs-Wärmetauscher (26) und dem Heiz-Wärmetauscher (28) vorgesehene obere Temperatureinstellungsklappe (30A), wobei die obere Temperatureinstellungsklappe (30A) ein erstes Bypass-Verhältnis einstellt, das ein Verhältnis von einem Volumen von den oberen Bypasskanal (29A) durchströmender Luft zu einem Volumen von aus dem oberen Teil (26A) des Kühlungs-Wärmetauschers (26) herausgeströmter Luft ist, eine in dem unteren Luftblasweg (12B) zwischen dem Kühlungs-Wärmetauscher (26) und dem Heiz-Wärmetauscher (28) vorgesehene untere Temperatureinstellungsklappe (30B), wobei die untere Temperatureinstellungsklappe (30B) ein zweites Bypass-Verhältnis einstellt, das ein Verhältnis von einem Volumen von den unteren Bypasskanal (29B) durchströmender Luft zu einem Volumen von aus dem unteren Teil (26B) des Kühlungs-Wärmetauschers (26) herausgeströmter Luft ist, eine Mischkammer (31), zu der aus dem oberen Luftblasweg (12A) und dem unteren Luftblasweg (12B) herausgeströmte Luft strömt, wobei die Mischkammer (31) einen oberen Mischraum (31A), in dem Luft, die den oberen Teil (28A) des Heiz-Wärmetauschers (28) durchströmt hat, mit Luft, die den oberen Bypasskanal (29A) durchströmt hat, vermischt wird, und einen unteren Mischraum (31B), in dem Luft, die den unteren Teil (28B) des Heiz-Wärmetauschers (28) durchströmt hat, mit Luft, die den unteren Bypasskanal (29B) durchströmt hat, vermischt wird, aufweist, einen Defrosterausblasdurchlass (32) und einen Lüfterausblasdurchlass (34), die zu dem oberen Mischraum (31A) weisen, einen Fußraumausblasdurchlass (36), der zu dem unteren Mischraum (31B) weist;
eine Defrosterklappe (32D), die eine Öffnungsfläche des Defrosterausblasdurchlasses (32) einstellt, eine Lüfterklappe (34D), die eine Öffnungsfläche des Lüfterausblasdurchlasses (34) einstellt, und eine Fußraumklappe (36D), die eine Öffnungsfläche des Fußraumausblasdurchlasses (36) einstellt,
wobei das Steuerverfahren die folgenden Schritte umfasst:
Positionieren der oberen Temperatureinstellungsklappe (30A) und der unteren Temperatureinstellungsklappe (30B) derart, dass sowohl das erste Bypass-Verhältnis als auch das zweite Bypass-Verhältnis im Wesentlichen null werden, und Steuern der Defrosterklappe (32D) derart, dass Luft, die die Mischkammer (31) durchströmt hat, durch den Defrosterausblasdurchlass (32) strömen kann, wenn Heizungsstartsteuerung durchgeführt wird;
**dadurch gekennzeichnet, dass** das Steuerverfahren ferner einen Schritt des Steuerns der oberen Temperatureinstellungsklappe (30A) und der unteren Temperatureinstellungsklappe (30B) derart, dass die untere Temperatureinstellungsklappe (30B) zunächst dahingehend bewegt wird, das zweite Bypass-Verhältnis von null zu erhöhen, während die obere Temperatureinstellungsklappe (30A) fixiert ist, um das erste Bypass-Verhältnis im Wesentlichen auf null zu halten, wenn die Temperatur von dem Fahrzeuginnenraum bei Anstieg der Temperatur in dem Fahrzeuginnenraum zuzuführender klimatisierter Luft allmählich gesenkt wird.

6. Steuerverfahren nach Anspruch 5,
wobei die Fußraumklappe (36D) so gesteuert wird, dass die Luft, die die Mischkammer (31) durchströmt hat, auch durch den Fußraumausblasdurchlass (36) strömen kann, wenn die obere Temperatureinstellungsklappe (30A) und die untere Temperatureinstellungsklappe (30B) so positioniert sind, dass das erste Bypass-Verhältnis und das zweite Bypass-Verhältnis im Wesentlichen null werden, und die Defrosterklappe (32D) so gesteuert wird, dass die Luft, die die Mischkammer (31) durchströmt hat, durch den Defrosterausblasdurchlass (32) strömen kann.

7. Steuerverfahren nach Anspruch 5 oder 6,
wobei die obere Temperatureinstellungsklappe (30A) und die untere Temperatureinstellungsklappe (30B) so gesteuert werden, dass das zweite Bypass-Verhältnis und das erste Bypass-Verhältnis zunehmen, während das zweite Bypass-Verhältnis größer als das erste Bypass-Verhältnis gehalten wird, wenn die Temperatur der dem Fahrzeuginnenraum zugeführten Luft bei Anstieg der Temperatur in dem Fahrzeuginnenraum aufgrund von weitergehender Heizungsstartsteuerung weiter abgesenkt wird.

8. Steuerverfahren nach Anspruch 7, das die Fahrzeugklimaanlage nach Anspruch 3 steuert,
wobei bei weiterem Anstieg der Temperatur in dem Fahrzeuginnenraum aufgrund von weitergehender Heizungsstartsteuerung die Defrosterklappe (32D), die Lüfterklappe (34D) und die Fußraumklappe (36D) so gesteuert werden, dass die Luft, die die Mischkammer (31) durchströmt hat, nicht durch den Defrosterausblasdurchlass (32) strömen kann und durch den Lüfterausblasdurchlass (34) und den Fußraumausblasdurchlass (36) strömen kann, und die obere Temperatureinstellungsklappe (30A) und die untere Temperatureinstellungsklappe (30B) so gesteuert werden, dass das erste Bypass-Verhältnis größer als das zweite Bypass-Verhältnis wird.

## Revendications

1. Climatiseur de véhicule pour climatiser l'air dans une cabine de véhicule, le climatiseur de véhicule comprenant :
un boîtier (10) ;
un chemin de soufflage d'air supérieur (12A) et un chemin de soufflage d'air inférieur (12B) qui sont prévus dans le boîtier (10) ;
une paroi (14) qui sépare le chemin de soufflage d'air supérieur (12A) et le chemin de soufflage d'air inférieur (12B) l'un de l'autre ;
un échangeur de chaleur de refroidissement (26) ayant une partie supérieure (26A) et une partie inférieure (26B) positionnées respectivement dans le chemin de soufflage d'air supérieur (12A) et le chemin de soufflage d'air inférieur (12B) ;
un échangeur de chaleur de chauffage (28) ayant une partie supérieure (28A) et une partie inférieure (28B) positionnées respectivement dans le chemin de soufflage d'air supérieur (12A) et le chemin de soufflage d'air inférieur (12B), sur un côté aval de l'échangeur de chaleur de refroidissement (26) ;
un canal de dérivation supérieur (29A) qui est prévu dans le chemin de soufflage d'air supérieur (12A), le canal de dérivation supérieur (29A) permettant à l'air s'étant écoulé hors de l'échangeur de chaleur de refroidissement (26) de s'écouler vers le côté aval en contournant l'échangeur de chaleur de chauffage (28) ;
un canal de dérivation inférieur (29B) qui est prévu dans le chemin de soufflage d'air inférieur (12B),
le canal de dérivation inférieur (29B) permettant à l'air s'étant écoulé hors de l'échangeur de chaleur de refroidissement (26) de s'écouler vers le côté aval en contournant l'échangeur de chaleur de chauffage (28) ;
un volet d'ajustement de température supérieur (30A) qui est prévu dans le chemin de soufflage d'air supérieur (12A) entre l'échangeur de chaleur de refroidissement (26) et l'échangeur de chaleur de chauffage (28), le volet d'ajustement de température supérieur (30A) ajustant un premier rapport de dérivation qui est un rapport d'un volume d'air passant à travers le canal de dérivation supérieur (29A) sur un volume d'air s'étant écoulé hors de la partie supérieure (26A) de l'échangeur de chaleur de refroidissement (26) ;
un volet d'ajustement de température inférieur (30B) qui est prévu dans le chemin de soufflage d'air inférieur (12B) entre l'échangeur de chaleur de refroidissement (26) et l'échangeur de chaleur de chauffage (28), le volet d'ajustement de température inférieur (30B) ajustant un deuxième rapport de dérivation qui est un rapport d'un volume d'air passant à travers le canal de dérivation inférieur (29B) sur un volume d'air s'étant écoulé hors de la partie inférieure (26B) de l'échangeur de chaleur de refroidissement (26) ;
une chambre de mélange (31) dans laquelle s'écoule l'air s'écoulant hors du chemin de soufflage d'air supérieur (12A) et du chemin de soufflage d'air inférieur (12B),
la chambre de mélange (31) comportant un espace de mélange supérieur (31A) dans lequel de l'air étant passé à travers la partie supérieure (28A) de l'échangeur de chaleur de chauffage (28) est mélangé avec de l'air étant passé à travers le canal de dérivation supérieur (29A) et un espace de mélange inférieur (31B) dans lequel de l'air étant passé à travers la partie inférieure (28B) de l'échangeur de chaleur de chauffage (28) est mélangé avec de l'air étant passé à travers le canal de dérivation inférieur (29B) ;
un passage de soufflage de dégivrage (32) et un passage de soufflage de ventilation (34) qui font face à l'espace de mélange supérieur (31A) ;
un passage de soufflage vers les pieds (36) qui fait face à l'espace de mélange inférieur (31B) ;
un volet de dégivrage (32D) qui ajuste une surface d'ouverture du passage de soufflage de dégivrage (32),
un volet de ventilation (34D) qui ajuste une surface d'ouverture du passage de soufflage de ventilation (34), et
un volet vers les pieds (36D) qui ajuste une surface d'ouverture du passage de soufflage vers les pieds (36) ; et
une unité de commande (40) qui commande le fonctionnement d'au moins le volet d'ajustement de température supérieur (30A), du volet d'ajustement de température inférieur (30B), du volet de dégivrage (32D), du volet de ventilation (34D), et du volet vers les pieds (36D),
l'unité de commande (40) positionnant le volet d'ajustement de température supérieur (30A) et le volet d'ajustement de température inférieur (30B) de telle sorte qu'à la fois le premier rapport de dérivation et le deuxième rapport de dérivation deviennent essentiellement nuls, et commandant le volet de dégivrage (32D) de telle sorte que de l'air s'étant écoulé à travers la chambre de mélange (31) puisse passer à travers le passage de soufflage de dégivrage (32) lorsqu'elle effectue une commande de démarrage de chauffage,
**caractérisé en ce que** l'unité de commande (40) commande le volet d'ajustement de température supérieur (30A) et le volet d'ajustement de température inférieur (30B) de telle sorte que le volet d'ajustement de température inférieur (30B) soit déplacé en premier de manière à augmenter le deuxième rapport de dérivation à partir de zéro tandis que le volet d'ajustement de température supérieur (30A) est fixé pour maintenir le premier rapport de dérivation sensiblement nul lors de l'abaissement progressif de la température de l'air climatisé devant être fourni à la cabine de véhicule à mesure que la température dans la cabine de véhicule augmente.

2. Climatiseur de véhicule selon la revendication 1, dans lequel l'unité de commande (40) commande le volet vers les pieds (36D) de telle sorte que de l'air s'étant écoulé à travers la chambre de mélange (31) puisse également passer à travers le passage de soufflage vers les pieds (36) lors du positionnement du volet d'ajustement de température supérieur (30A) et du volet d'ajustement de température inférieur (30B) de telle sorte qu'à la fois le premier rapport de dérivation et le deuxième rapport de dérivation deviennent sensiblement nuls et lors de la commande du volet de dégivrage (32D) de telle sorte que l'air s'étant écoulé à travers la chambre de mélange (31) puisse passer à travers le passage de soufflage de dégivrage (32).

3. Climatiseur de véhicule selon la revendication 1 ou 2,
dans lequel l'unité de commande (40) commande le volet d'ajustement de température supérieur (30A) et le volet d'ajustement de température inférieur (30B) de manière à augmenter le deuxième rapport de dérivation et le premier rapport de dérivation tout en maintenant le deuxième rapport de dérivation supérieur au premier rapport de dérivation lors de l'abaissement supplémentaire de la température de l'air climatisé devant être fourni à la cabine de véhicule à mesure que la température dans la cabine de véhicule augmente alors que la commande de démarrage de chauffage continue.

4. Climatiseur de véhicule selon la revendication 3, dans lequel, lorsque la température dans la cabine de véhicule augmente davantage alors que la commande de démarrage de chauffage continue, l'unité de commande (40) commande le volet de dégivrage (32D), le volet de ventilation (34D) et le volet vers les pieds (36D) de telle sorte que l'air s'étant écoulé à travers la chambre de mélange (31) ne puisse pas passer à travers le passage de soufflage de dégivrage (32) et puisse passer à travers le passage de soufflage de ventilation (34) et le passage de soufflage vers les pieds (36), et commande le volet d'ajustement de température supérieur (30A) et le volet d'ajustement de température inférieur (30B) de telle sorte que le premier rapport de dérivation devienne supérieur au deuxième rapport de dérivation.

5. Procédé de commande pour un climatiseur de véhicule comportant un chemin de soufflage d'air supérieur (12A) et un chemin de soufflage d'air inférieur (12B), un échangeur de chaleur de refroidissement (26) ayant une partie supérieure (26A) et une partie inférieure (26B) positionnées respectivement dans le chemin de soufflage d'air supérieur (12A) et dans le chemin de soufflage d'air inférieur (12B), un échangeur de chaleur de chauffage (28) ayant une partie supérieure (28A) et une partie inférieure (28B) positionnées respectivement dans le chemin de soufflage d'air supérieur (12A) et dans le chemin de soufflage d'air inférieur (12B), sur un côté aval de l'échangeur de chaleur de refroidissement (26),
un canal de dérivation supérieur (29A) qui est prévu dans le chemin de soufflage d'air supérieur (12A), le canal de dérivation supérieur (29A) permettant à de l'air s'étant écoulé hors de l'échangeur de chaleur de refroidissement (26) de s'écouler vers le côté aval en contournant l'échangeur de chaleur de chauffage (28),
un canal de dérivation inférieur (29B) qui est prévu dans le chemin de soufflage d'air inférieur (12B),
le canal de dérivation inférieur (29B) permettant à l'air s'étant écoulé hors de l'échangeur de chaleur de refroidissement (26) de s'écouler vers le côté aval en contournant l'échangeur de chaleur de chauffage (28),
un volet d'ajustement de température supérieur (30A) qui est prévu dans le chemin de soufflage d'air supérieur (12A) entre l'échangeur de chaleur de refroidissement (26) et l'échangeur de chaleur de chauffage (28), le volet d'ajustement de température supérieur (30A) ajustant un premier rapport de dérivation qui est un rapport d'un volume d'air passant à travers le canal de dérivation supérieur (29A) sur un volume d'air s'étant écoulé hors de la partie supérieure (26A) de l'échangeur de chaleur de refroidissement (26), un volet d'ajustement de température inférieur (30B) qui est prévu dans le chemin de soufflage d'air inférieur (12B) entre l'échangeur de chaleur de refroidissement (26) et l'échangeur de chaleur de chauffage (28), le volet d'ajustement de température inférieur (30B) ajustant un deuxième rapport de dérivation qui est un rapport d'un volume d'air passant à travers le canal de dérivation inférieure (29B) sur un volume d'air s'étant écoulé hors de la partie inférieure (26B) de l'échangeur de chaleur de refroidissement (26), une chambre de mélange (31) vers laquelle s'écoule de l'air s'écoulant hors du chemin de soufflage d'air supérieur (12A) et du chemin de soufflage d'air inférieur (12B), la chambre de mélange (31) comportant un espace de mélange supérieur (31A) dans lequel de l'air étant passé à travers la partie supérieure (28A) de l'échangeur de chaleur de chauffage (28) est mélangé avec de l'air étant passé à travers le canal de dérivation supérieur (29A) et un espace de mélange inférieur (31B) dans lequel de l'air étant passé à travers la partie inférieure (28B) de l'échangeur de chaleur de chauffage (28) est mélangé avec de l'air étant passé à travers le canal de dérivation inférieur (29B) ;
un passage de soufflage de dégivrage (32) et un passage de soufflage de ventilation (34) qui font face à l'espace de mélange supérieur (31A) ;
un passage de soufflage vers les pieds (36) qui fait face à l'espace de mélange inférieur (31B) ; un volet de dégivrage (32D) qui ajuste une surface d'ouverture du passage de soufflage de dégivrage (32),
un volet de ventilation (34D) qui ajuste une surface d'ouverture du passage de soufflage de ventilation (34), et
un volet vers les pieds (36D) qui ajuste une surface d'ouverture du passage de soufflage vers les pieds (36),
le procédé de commande comprenant les étapes suivantes :
positionnement du volet d'ajustement de température supérieur (30A) et du volet d'ajustement de température inférieur (30B) de telle sorte que le premier rapport de dérivation et le deuxième rapport de dérivation deviennent sensiblement nuls et commande du volet de dégivrage (32D) de telle sorte que de l'air s'étant écoulé à travers la chambre de mélange (31) puisse passer à travers le passage de soufflage de dégivrage (32) lorsque la commande de démarrage de chauffage est effectuée ;
**caractérisé en ce que** le procédé de commande comprend en outre une étape de commande du volet d'ajustement de température supérieur (30A) et du volet d'ajustement de température inférieur (30B) de telle sorte que le volet d'ajustement de température inférieur (30B) soit déplacé en premier de manière à augmenter le deuxième rapport de dérivation à partir de zéro tandis que le volet d'ajustement de température supérieur (30A) est fixé pour maintenir le premier rapport de dérivation sensiblement nul lors de l'abaissement progressif de la température de l'air climatisé devant être fourni à la cabine de véhicule à mesure que la température dans la cabine de véhicule augmente.

6. Procédé de commande selon la revendication 5, dans lequel le volet vers les pieds (36D) est commandé de telle sorte que de l'air s'étant écoulé à travers la chambre de mélange (31) puisse également passer à travers le passage de soufflage vers les pieds (36) lors du positionnement du volet d'ajustement de température supérieur (30A) et du volet d'ajustement de température inférieur (30B) de telle sorte qu'à la fois le premier rapport de dérivation et le deuxième rapport de dérivation deviennent sensiblement nuls et le volet de dégivrage (32D) est commandé de telle sorte que l'air s'étant écoulé à travers la chambre de mélange (31) puisse passer à travers le passage de soufflage de dégivrage (32).

7. Procédé de commande selon la revendication 5 ou 6, dans lequel le volet d'ajustement de température supérieur (30A) et le volet d'ajustement de température inférieur (30B) sont commandés de telle sorte que le deuxième rapport de dérivation et le premier rapport de dérivation augmentent tandis que le deuxième rapport de dérivation est maintenu supérieur au premier rapport de dérivation lorsque la température de l'air climatisé devant être fourni à la cabine de véhicule est abaissée davantage à mesure que la température de la cabine de véhicule augmente alors que la commande de démarrage de chauffage continue.

8. Procédé de commande selon la revendication 7, commandant le climatiseur de véhicule selon la revendication 3,
dans lequel, lorsque la température dans la cabine de véhicule augmente davantage alors que la commande de démarrage de chauffage continue, le volet de dégivrage (32D), le volet de ventilation (34D) et le volet vers les pieds (36D) sont commandés de telle sorte que l'air s'étant écoulé à travers la chambre de mélange (31) ne puisse pas passer à travers le passage de soufflage de dégivrage (32) et puisse passer à travers le passage de soufflage de ventilation (34) et le passage de soufflage vers les pieds (36), et le volet d'ajustement de température supérieur (30A) et le volet d'ajustement de température inférieur (30B) sont commandés de telle sorte que le premier rapport de dérivation devienne supérieur au deuxième rapport de dérivation.
